# EUROPÄISCHE PATENTSCHRIFT

(11) **EP 3 061 646 B1**
(45) Veröffentlichungstag und Bekanntmachung des Hinweises auf die Patenterteilung: **18.07.2018**
(21) Anmeldenummer: 15188562.1
(22) Anmeldetag: 06.10.2015
(51) Int. Cl.: B60N 2/36, B60R 5/00

(54) **PERSONENFAHRZEUG**
PASSENGER VEHICLE
VEHICULE DE TOURISME

(30) Priorität: 27.02.2015 DE 202015001535 U
(43) Veröffentlichungstag der Anmeldung: 31.08.2016
(73) Patentinhaber: Radil, Jan, Caslav 28601 (CZ)
(72) Erfinder: Radil, Jan, Caslav 28601 (CZ)
(74) Vertreter: Patentanwälte Walther Hinz Bayer PartGmbB

(56) Entgegenhaltungen:
- WO-A1-00/13931
- FR-A1- 2 677 312
- JP-A- H10 236 234
- JP-U- S62 135 649

## Beschreibung

Die Erfindung betrifft ein Personenfahrzeug mit Frontsitzen gemäß dem Oberbegriff des Anspruches 1.
Aus der JP H10 236234 A ist bekannt zum Transport von langen Gegenständen in Fahrzeugen den Vordersitz des Fahrzeugs umzuklappen und im Armaturenbrett eine verschließbare Öffnung zur Aufnahme der zu transportierenden Gegenstände vorzusehen.
Auch die WO 00/13931 A1 offenbart in diesem Zusammenhang einen Sitz eines Fahrzeugs mit einer verschließbaren Öffnung in der Rückenlehne des Sitzes zum Durchladen von langen Gütern.

Personenfahrzeuge sind in den unterschiedlichsten Ausführungsformen bekannt. So gibt es Fahrzeuge, die lediglich Vordersitze aufweisen, es gibt aber auch Fahrzeuge mit einer Rücksitzbank mit eingelassenen Rücksitzen. Auch bei solchen Fahrzeugen ist zwischenzeitlich bekannt, in einem Vordersitz und der Rücksitzbank eine verschließbare Durchladeöffnung vorzusehen, um längere Gegenstände transportieren zu können, beispielsweise Skier. Diesbezüglich wird verwiesen auf die FR 2 677 312 A. Diese Rücksitzdurchladeöffnung kann sich im Bereich der Sitze befinden, aber auch zwischen den in der Rücksitzbank eingelassenen Sitzen. Die Rücksitzdurchladeöffnung kann auch dadurch gebildet werden, dass ein Teil der rückwärtigen Sitze umgeklappt werden kann. Das heißt, dass nicht notwendigerweise eine gesonderte Öffnung in der Rücksitzbank vorgesehen sein muss, sondern dass auch durch beispielsweise eine 2/3 1/3 Teilung der Rücksitzbank mit der Möglichkeit des Umklappens zumindest eines Drittels der Rücksitzbank eine entsprechende Durchladeöffnung bereitgestellt werden kann.
Insbesondere bei Kleinwagen ist es nun so, dass häufig die Länge, die durch die Rücksitzdurchladeöffnung zum Transport von langen Gegenständen, z. B. von Skiern, eröffnet wird nicht ausreichend ist.

Das JP S62 135649 U zeigt einen Sitz eines Fahrzeugs, wobei die Rückenlehne des Sitzes eine verschließbare Öffnung zur Durchladung von langen Gütern aufweist. Das zu transportierende Gut kann hierbei mit einem Gurt gesichert werden.

Zur weiteren Sicherung des Gutes während des Transports, dienen erfindungsgemäß die Merkmale des kennzeichnenden Teils des Anspruchs 1 in Verbindung mit den Merkmalen des Oberbegriffs. Der Beifahrersitz der Frontsitze weist demnach eine Frontsitzdurchladeöffnung auf, die vorzugsweise verschließbar ist. Das heißt, dass die Frontsitzdurchladeöffnung ganz ähnlich ausgebildet ist, wie die zuvor beschriebene Rücksitzladeöffnung. Mit einer solchen Kombination aus Rücksitzdurchladeöffnung und Frontsitzdurchladeöffnung, wird die Möglichkeit eröffnet, wesentlich längere Gegenstände in dem Fahrzeug sicher transportieren zu können. Denn durch die beiden insbesondere in Flucht zueinander angeordneten Durchladeöffnungen wird erreicht, dass das zu transportierende Gut wesentlich sicherer im Auto verstaut wird, als wenn lediglich eine Rücksitzdurchladeöffnung vorgesehen ist, und die Skier beispielsweise zwischen den Vordersitzen lagern.

Der Transport länglicher Güter wird dadurch gesichert, dass im Bereich der Frontsitz- und/oder der Rücksitzdurchladeöffnung Sicherungsmittel, z. B. ein Gurt, vorgesehen sind. Der Gurt kann ähnlich einem Sicherheitsgurt für Personen mit Gurtschloss und Gurtroller ausgebildet sein. Nach der Erfindung ist der Gurt mit einem Gurtstraffer versehen, der eine Treibladung aufweisen kann, um im Falle eines Unfalls das transportierte Gut, z. B. Skier, in der Durchladeöffnung zu sichern.

Als besonders vorteilhaft hat sich herausgestellt, wenn eine weitere dritte Öffnung im Armaturenbrett vorgesehen ist, die vorteilhaft ebenfalls verschließbar ist. Hieraus folgt unmittelbar, dass zu transportierende Gegenstände, wie z. B. Skier hiermit noch sicherer transportiert werden können, da auch die Enden der Skier, also die Spitzen, gegen Verrutschen sicher gelagert werden können.

Anhand der Zeichnungen wird die Erfindung beispielhaft näher erläutert.
- Fig. 1: zeigt schematisch ein Personenfahrzeug mit vier Sitzen in einer Ansicht von oben;
- Fig. 2: zeigt einen Schnitt gemäß der Linie II-II aus Fig. 1;
- Fig. 3: zeigt einen Schnitt gemäß der Linie III-III aus Fig. 1;
- Fig. 4: zeigt einen Schnitt gemäß der Linie IV-IV aus Fig. 1;

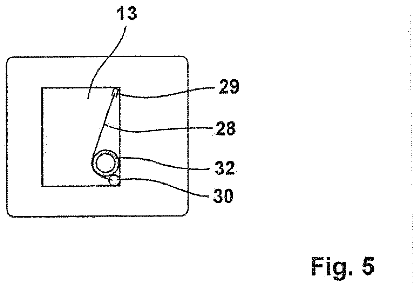

- Fig. 5: zeigt die Anordnung eines Gurtes beispielhaft in der Rücksitzdurchladeöffnung.

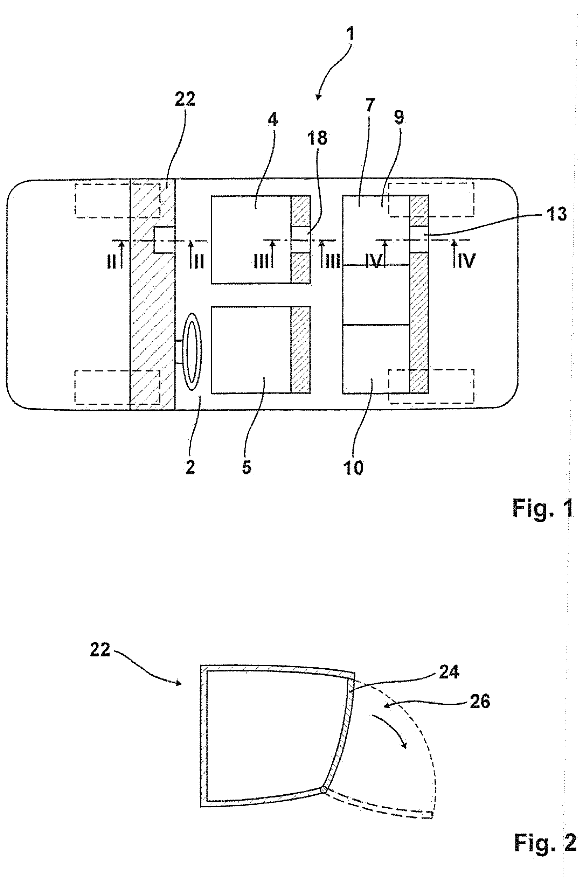

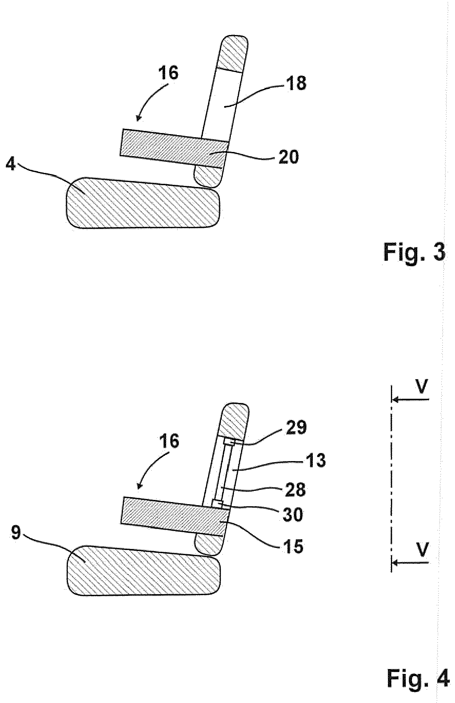

Das gemäß Fig. 1 insgesamt mit 1 bezeichnete Personenfahrzeug weist eine Karosserie 2 auf, wobei in der Karosserie zwei Vordersitze 4 und 5 vorgesehen sind, sowie eine Rücksitzbank 7 mit zwei eingelassenen Rücksitzen 9 und 10. Im Bereich des Rücksitzes 9 ist eine Rücksitzdurchladeöffnung 13 vorgesehen. Die Rücksitzdurchladeöffnung 13 umfasst eine schwenkbare Klappe 15, die zur Bildung der Rücksitzdurchladeöffnung nach vorne in Richtung des Pfeiles 16 auf die Sitzfläche des Rücksitzes 9 zu ausklappbar ist (Fig. 4). In Flucht zu der Rücksitzdurchladeöffnung 13 besitzt der Vordersitz 4 eine sogenannte Frontsitzdurchladeöffnung 18, die ebenfalls eine schwenkbare Klappe 20 aufweist, um so die Frontsitzdurchladeöffnung 18 freizugeben. Diese Klappe ist, genau wie bei der Beschreibung der Rücksitzdurchladeöffnung 13 ebenfalls auf die Sitzfläche des Vordersitzes 4 zu klappbar, wie sich dies auch anschaulich aus Fig. 3 ergibt.

Weiterhin in Flucht zu der Frontsitzdurchladeöffnung 18 weist das Armaturenbrett 22 eine mit einer ausschwenkbaren Klappe 24 versehene Armaturenbrettöffnung 26 auf. Das heißt, selbst bei einem Kleinwagen können relativ lange Gegenstände, wie insbesondere auch lange Skier sicher transportiert werden, wenn sowohl die Rücksitzdurchladeöffnung 13 als auch die Frontsitzdurchladeöffnung 18 und gegebenenfalls die Armaturenbrettöffnung 26 sich im Wesentlichen in einer Flucht befinden, um beispielsweise Skier aufnehmen zu können.

Sowohl die Frontsitz- und/oder die Rücksitzdurchladeöffnung können jeweils einen Gurt 28 zur Ladungssicherung des transportierten Gutes, also z. B. von einem Rohr 32 oder Skiern, aufweisen. Der Gurt weist, ähnlich dem Sicherheitsgurt für Personen in Kraftfahrzeugen, ein Gurtschloss 29 und einen Gurtroller 30 auf. Der Gurtroller 30 ist hierbei mit einem Gurtstraffer versehen, der im Falle eines Unfalls gegebenenfalls durch eine Treibladung betätigt wird.

### Bezugszeichenliste:

- 1: Personenfahrzeug
- 2: Karosserie
- 4: Vordersitz
- 5: Vordersitz
- 7: Rücksitzbank
- 9: Rücksitz
- 10: Rücksitz
- 13: Rücksitzdurchladeöffnung
- 15: schwenkbare Klappe
- 16: Pfeil
- 18: Frontsitzdurchladeöffnung
- 20: schwenkbare Klappe
- 22: Armaturenbrett
- 24: ausschwenkbare Klappe
- 26: Armaturenbrettöffnung
- 28: Gurt
- 29: Gurtschloss
- 30: Gurtroller
- 32: Rohr (Transportgut)

## Patentansprüche

1. Personenfahrzeug (1) mit Frontsitzen,
wobei
der Beifahrersitz (4) der Frontsitze (4, 5) eine Frontsitzdurchladeöffnung (18) aufweist und das Fahrzeug Rücksitze (9, 10) aufweisen kann, wobei im Bereich der Rücksitze (9, 10) eine Rücksitzdurchladeöffnung (13) vorgesehen ist, wobei sich die Frontsitzdurchladeöffnung (18) in etwa in der Flucht zur Rücksitzdurchladeöffnung (13) befindet
**dadurch gekennzeichnet,**
**dass** die Frontsitz- und/oder Rücksitzdurchladeöffnung (13, 18) Sicherungsmittel zur Fixierung von in der Frontsitz- und/oder Rücksitzdurchladeöffnung (13, 18) angeordneter Güter aufweist, wobei das Sicherungsmittel als Gurt (28) ausgebildet ist, wobei der Gurt (28) einen Gurtstraffer umfasst.

2. Personenfahrzeug (1) nach Anspruch 1,
**dadurch gekennzeichnet,**
**dass** die Frontsitzdurchladeöffnung (18) verschließbar ist.

3. Personenfahrzeug (1) nach Anspruch 1,
**dadurch gekennzeichnet,**
**dass** das Fahrzeug (1) in etwa in der Flucht zur Frontsitzdurchladeöffnung (18) am Armaturenbrett (22) eine Armaturenbrettöffnung (26) aufweist.

4. Personenfahrzeug (1) nach Anspruch 3,
**dadurch gekennzeichnet,**
**dass** die Armaturenbrettöffnung (26) verschließbar ist.

5. Personenfahrzeug (1) nach einem der voranstehenden Ansprüche,
**dadurch gekennzeichnet,**
**dass** der Gurt (28) einen Gurtroller (30) aufweist.

## Claims

1. A passenger vehicle (1) with front seats, wherein the passenger seat (4) among the front seats (4, 5) has a front seat loading opening (18) and the vehicle can have rear seats (9, 10), wherein a rear seat loading opening (13) is provided in the area of the rear seats (9, 10), wherein the front seat loading opening (18) is approximately aligned with the rear seat loading opening (13),
**characterized in that**
the front seat and/or rear seat loading opening (13, 18) comprise securing means for fixing the goods disposed in the front seat and/or rear seat loading opening (13, 18), wherein the securing means is formed as a belt (28), wherein the belt (28) includes a belt tensioner.

2. The passenger vehicle (1) according to claim 1,
**characterized in that**
the front seat loading opening (18) is closable.

3. The passenger vehicle (1) according to claim 1,
**characterized in that**
the vehicle (1) comprises a dashboard opening (26) in the dashboard (22) that is approximately aligned with the front seat loading opening (18).

4. The passenger vehicle (1) according to claim 3,
**characterized in that**
the dashboard opening (26) is closable.

5. The passenger vehicle (1) according to one of the afore-mentioned claims,
**characterized in that**
the belt (28) comprises a belt reel (30).

## Revendications

1. Véhicule à passagers (1) avec des sièges avant,
le siège passager (4) parmi les sièges avant (4, 5) comportant une ouverture de chargement de siège avant (18) et le véhicule comportant des sièges arrières (9, 10), une ouverture de chargement de siège arrière (13) étant disposée dans la région des sièges arrières (9, 10), l'ouverture de chargement de siège avant (18) étant approximativement alignée avec l'ouverture de chargement de siège arrière (13),
**caractérisé en ce que**
les ouvertures de chargement de siège avant et/ou de siège arrière (13, 18) comportent des moyens de fixation pour fixer des biens disposés dans l'ouverture de chargement de siège avant et/ou arrière (13, 18), le moyen de fixation prenant la forme d'une ceinture (28), la ceinture (28) comprenant un tendeur de ceinture.

2. Véhicule à passagers (1) selon la revendication 1,
**caractérisé en ce que**
l'ouverture de chargement de siège avant (18) peut être fermée.

3. Véhicule à passagers (1) selon la revendication 1,
**caractérisé en ce que**
le véhicule (1) comporte une ouverture de tableau de bord (26) dans le tableau de bord (22) alignée avec l'ouverture de chargement de siège avant (18).

4. Véhicule à passagers (1) selon la revendication 3,
**caractérisé en ce que**
l'ouverture de tableau de bord (26) peut être fermée.

5. Véhicule à passagers (1) selon l'une des revendications précédentes
**caractérisé en ce que**
la ceinture (28) comporte un enrouleur de ceinture (30).
